# EUROPEAN PATENT SPECIFICATION

(11) **EP 0 399 416 B1**
(45) Date of publication and mention of the grant of the patent: **22.12.1993**
(21) Application number: 90109550.5
(22) Date of filing: 19.05.1990
(51) Int. Cl.: B01J 8/12, B01D 46/32

(54) **Method for removal of dust contained in a gas and for reaction of a toxic component of said gas**
Verfahren zur Entstaubung eines Gases und zur Reaktion toxischer Komponenten des Gases
Procédé pour éliminer les paussières d'un gaz et pour la réaction de composés toxiques contenus dans ledit gaz

(30) Priority: 23.05.1989 JP 58707/89
(43) Date of publication of application: 28.11.1990
(73) Proprietor: Kawasaki Jukogyo Kabushiki Kaisha, Kobe-shi Hyogo 650-91 (JP)
(72) Inventor: Tajiri, Hironori, Tarumi-ku, Kobe-shi, Hyogo-ken (JP); Kamei, Kenji, Suma-ku, Kobe-shi, Hyogo-ken (JP)
(74) Representative: Rau, Manfred, Dr. Dipl.-Ing.

(56) References cited:
- DE-A- 3 401 616
- GB-A- 217 566
- GB-A- 638 745

## Description

The present invention relates to a method according to the introductory part of the claim. Such a method is known from DE-A-3 401 616.

Such gas as from coal gasified gas or exhaust gas of a high pressure circulating fluidized bed boiler, etc usually contains powdered dust such as fly-ash and/or carbon dust and toxic gas such as hydrogen sulfides, sulfur dioxide and/or NOx and it is highly desired to remove them before discharge to atomosphere.

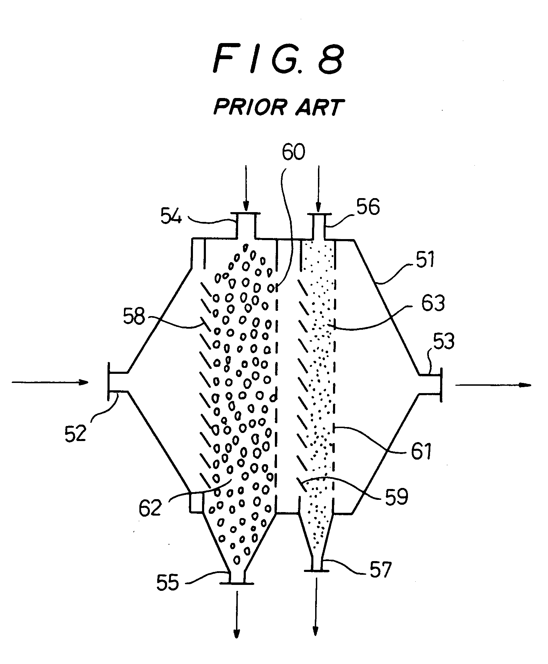

Fig. 8 is a schematic cross section of a conventional dry type flue gas desulfurizing apparatus as disclosed in Japanese Utility Model Application Laid-open No. 24326/1985.

In Fig. 8, exhaust gas containing toxic gas such as sulfur dioxide is supplied through an exhaust gas inlet 52 of a casing 51 is diffused therein and enters into a desulfurizing region 62 through a louver 58 provided in the casing. The desulfurizing region 62 is defined by the louver 58 a screen 60 on a gas exit side thereof and a wall of the casing 51. An activated carbon supply port 54 and an activated carbon discharge port 55 are provided above and below the desulfurizing region 62, respectively, so that the latter is filled with activated carbon supplied through the activated carbon supply port 54 and moving down by gravity. Sulfides contained in exhaust gas flown into the desulfurizing region 62 through the louver 58 are adsorbed by relatively large activated carbon particles and dust having relatively large particle size is trapped in between activated carbon particles and by the screen 60, while passing through the desulfurizing region 62.

A dust removal region 63 is arranged in a downstream side of the desulfurizing region 62 in the casing 51. The dust removal region 63 has a similar structure to that of the desulfurizing region 62 except that it is filled with granular bed material having particle size smaller than that of activated carbon in the desulfurizing region 62. Exhaust gas flown from the desulfurizing region 62 passes through louver 59 to granular bed material which collects fine dust in exhaust gas and, after passed through the screen 61 discharged from the casing 51 through a gas discharge port 53.

A granular bed material supply port 56 and a particle discharge port 57 are provided above and below the dust removal region 63, respectively. Collected dust, fine particles of activated carbon carried from the desulfurizing region 62 along with exhaust gas and granular bed material are discharged through the particle discharge port 57, continuously. In order to maintain the dust removal region 63 always filled with clean granular bed material, fresh granular bed material is continuously supplied thereto through the granular bed material supply port 56.

In the conventional apparatus a method mentioned above, desulfurization and dust removal for fluid such as gas containing dust and toxic gas such as hydrogen sulfide and sulfur dioxide are performed within a single vessel. In such case, however, it is necessary for removal of sulfides contained in exhaust gas to keep exhaust gas in contact with activated carbon in the desulfurizing region 62 for a time longer enough than a certain time. Further, in a case such as shown in Fig. 8 where flowing direction of exhaust gas is in perpendicular to the layer of activated carbon, it is necessary to make a thickness of desulfurizing region in a gas flowing direciton large enough. Further, in a case where feeding and discharging speed of activated carbon for the desulfurizing region is relatively low, dust may be accumulated in the desulfurizing region causing pressure loss to occur. When, in order to solve this problem, the feeding and discharging speed of activated carbon are increased, power required to do this increase, is necessary.

In order to remove such problem, it can be considered to arrange the dust removal region in a upstream of the desulfurizing region. In such case, however, fine particles of activated carbon from the desulfurizing region may be mixed in exhaust gas to be discharged to atomosphere. That is, another dust removing layer must be provided downstream of the desulfurizing region.

Further, in the conventional apparatus and method as described in DE-A-3 401 616, desulfurizing agent in the desulfurizing region and dust filtering agent in the dust removal region are different, which requires separate peripheral apparatus such as lock hoppers in an upper and a lower portions of each region, causing cost to be increased.

An object of the present invention is to provide a method using an apparatus having a simple construction and capable of performing reliable reaction such as desulfurization, denitrification and dust removal.

The above object can be achieved according to the characterizing part of the claim.

A vertical length of the reaction agent storage passage is preferably selected such that a time required for exhaust gas to pass therethrough is longer than a time necessary to complete a gas adsorbing of reaction agent therein. In such case, a cross sectional area of the region is preferably made larger than that of a portion of the vessel below the region so that speed of upwardly moving gas and going down speed of reaction agent are lowered. In this case, it is possible to reduce the vertical length of the region.

The advantages offered by the invention are mainly
(1) that the facility becomes compact as a whole and handling thereof becomes simple due to the fact that dust removal and reaction/adsorption are performed simultaneously with a single granular processing agent and a single granular bed column,
(2) that, in addition to the complete removal of toxic components such as sulphur compounds and/or nitrogen compounds contained in gas due to the fact that, in the final stage, gas passes through the storage portion having a large cross section and a large thickness in gas flow direction at a lower speed with a sufficiently long contact time with reaction agent, it is possible to prevent undesired discharge of gas containing re-scattered dust of collected dust and/or fine particles of reaction agent from the container from occuring due to that a sufficient dust removal is performed in the storage portion,
(3) that it is possible to easily regulate moving speed of reaction agent to an optimum value according to contents of gas, amount of dust contained and flow rate of gas, etc., and
(4) that, when used in a high pressure system, it is possible to supply and/or discharge reaction agent while maintaining high pressure.

Fig. 1 is a vertical cross section of a moving granular bed type dust removal reaction apparatus according to an embodiment as used for practicing the method according to the present invention;
Fig. 2 is a cross section taken along a line II-II in Fig. 1;
Fig. 3 is a vertical cross section of a moving granular bed type dust removal reaction apparatus according to another embodiment;
Fig. 4 is a cross section taken along a line IV-IV in Fig. 3;
Fig. 5 is a block diagram of a system used to confirm the effect obtained by the present invention;
Figs. 6 and 7 are graphs showing the effect of the present invention; and
Fig. 8 shows a conventional apparatus schematically.

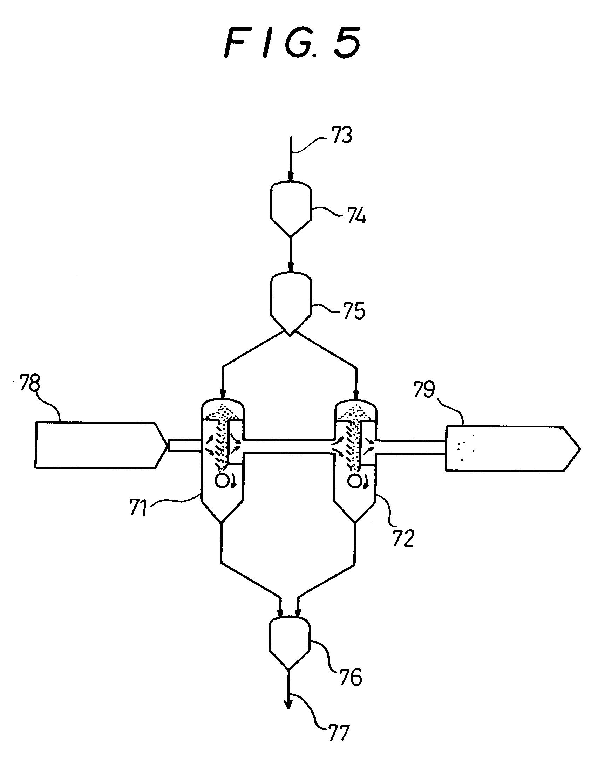

In order to clarify the principle of the present invention, some experiments conducted by the inventors will be described first with reference to Figs. 5 to 7 and, then, embodiments of the present invention will be described in detail.

In Fig. 5 which shows an apparatus used in these experiment, it includes a first dust collector 71, a second dust collector 72 series connected to the first dust collector 71, filter material 73, filter material supply tanks 74 and 75, a filter material discharge tank 76, a mixture 77 of filter material and dust, gas 78 containing dust and purifier gas 79.

Each dust collector is provided at a center portion of a container thereof on the gas inlet side with a louver and on the gas outlet side with a metal mesh and defines a space between the louver, the mesh and a container side wall, which is filled with filter material. The dust collector further is connected at a lower portion of the space to a variable speed, filter material discharge device 76 and at an upper portion to the filter material supply tank 75 to which filter material is supplied from the supply tank 74. The variable speed filter material discharge device 76 serves to make flow rate of filter material in the space variable under high pressure.

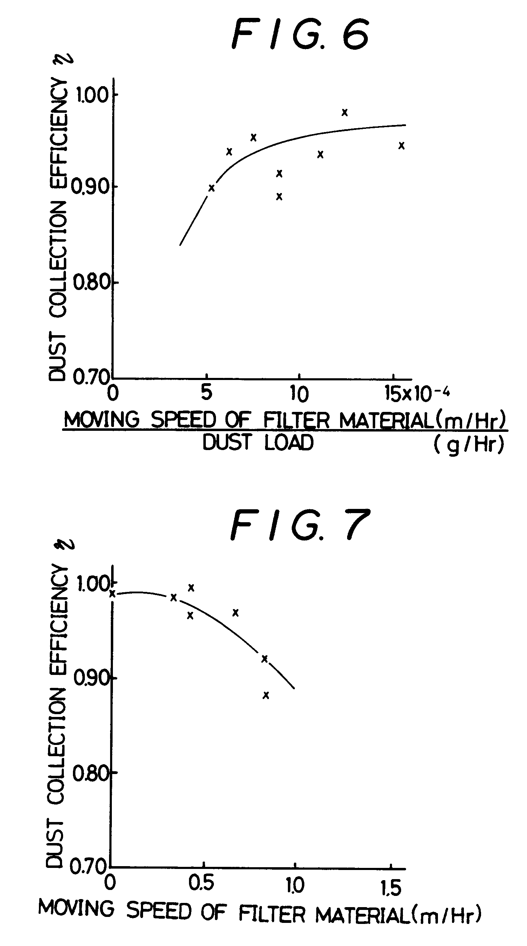

By changing dust density of gas, flowing speed of filter material in the dust collectors 71 and 72, data are obtained, which are shown in Figs. 6 and 7.
(1) In the dust collector 71 in the upstream, since, as shown in Fig. 6, dust collection efficiency is abruptly lowered when a ratio of moving speed (m/Hr) or filter material in the space to dust load (g/Hr) becomes smaller than a limit (about 6 X 10⁻⁴m/g in Fig. 6), it is necessary to maintain the moving speed of filter material at a value above the limit when dust load is constant.
(2) In the second dust collector 72 in the downstream, a high dust collection efficiency is obtained, as shown in Fig. 7, by restricting the moving speed of filter material below a certain constant value since gas supplied thereto contains less dust.

Summarizingly, it is possible to obtain a high dust collection efficiency by increasing moving speed of filter material in the first dust collector to prevent a clogging of filter material layer and hence blowing out of gas containing high dust content through un-clogged portion of the filter layer from occuring and by lowering the moving speed in the second dust collector to enhance dust adsorbance to filter material to thereby reduce gap size between filter material particles so that fine dust can be captured thereby.

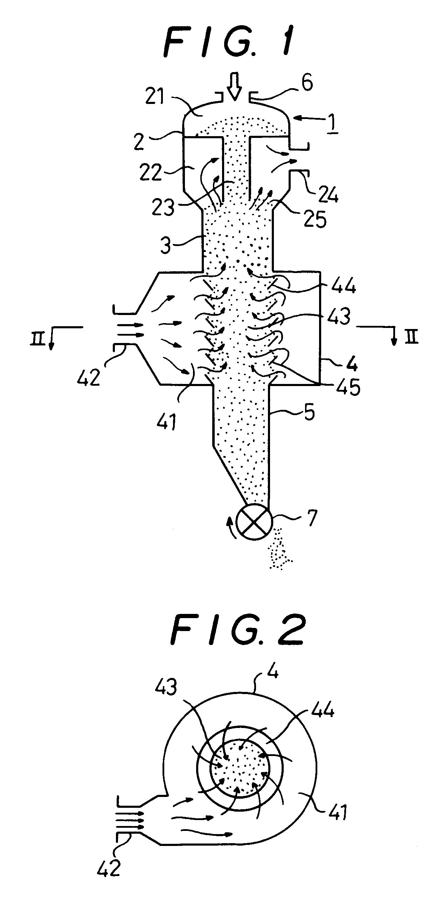

Now, a first embodiment of the present invention utilizing these facts will be described with reference to Figs. 1 and 2, in which Fig. 1 is a cross section of a moving granular bed dust removal and reaction apparatus and Fig. 2 is a cross section taken along a line II-II in Fig. 1.

In Fig. 1, the apparatus includes a generally vertically arranged cylindrical air-tight vessel 1 having an enlarged upper portion 2, a reaction agent storage portion 3 arranged below the upper portion 2, a middle portion 4 connceted to a lower end of the storage portion 3 and a lower portion 5 conncected to a lower end of the middle portion 4. A reaciton agent supply port 6 is provided at a top of the upper portion 2. The upper portion 2 includes an upper storage portion 21, a center passage 23 for reaction agent and an annular gas chamber 22 arranged coaxially with the center passage 23. The gas chamber 22 has a gas discharge port 24 formed in a side wall thereof an a bottom portion 25 communicated with the reaction agent storage portion 3. The central passage 23 is connected to the reaction agent supply port 6 so that reaction agent supplied through the supply port 6 can be moved down by gravity. The storage portion has a diameter substantially larger than that of and is communicated with the center passage 23 of the upper portion 2.

The middle portion 4 has an increased diameter and defines an outer annular gas chamber 41 having a gas inlet port 42 and a central passage 43. The annular gas chamber 41 and the central passage 43 of the middle portion 4 are partitioned from each other by a cylindrically arranged louver 44 to define the central passage 43. The central passage 43 is communicated with the reaction agent storage portion 3. The lower portion 5 defines a cylindrical passage communicated with the central passage 43 of the middle portion 4 and has a reaction agent discharge device 7 such as rotary valve provided at a bottom thereof. The cylindrical passage defined by the lower portion 5 has a diameter smaller than that of the central passage 43 of the middle portion 4 which is, in turn, slightly smaller than that of the storage portion 3. Thus, granular reaction agent supplied from the supply port 6 can be moved vertically through a vertical passage formed by a series connection of the center passage 23 of the upper portion 2, the storage portion 3, the center 43 passage defined by the louver 44 of the middle portion 4 and the lower portion 5 by gravity and is discharged suitably through the discharge device 7, with lower moving speed in the storage portion 3 and the central passage 43 to allow better adsorption of contaminant given by the reduction of diameter of the series connected passage.

The louver 44 includes a plurality of vertically arranged fins 45 separated suitably from each other to allow gas to flow from a circumference thereof into the center portion 43 surrounded thereby and having suitable shape, size, space and inclination angle to provide angle of repose for reaciton agent flowing down through the center passage 43 so that leakage of agent to the surrounding annular gas chamber 41 is prevented.

The upper surface of the reaction agent filled in the storage portion 3 which form a bottom of the gas chamber 22 is rest in certain level which is given by the angle of repose for reaction agent.

Gas containing dust, introduced through the gas inlet 42 and diffused in the annular gas chamber 41 flows circumferentially through the louver 45 into the central passage 43 filled with reaction agent to remove relatively large dust particles, passes through reaction agent which flows down at a lower speed in the storage portion 3 while being purified by removing fine dust particle and sulphur compound or nitrogen compound in gas and is discharged through the annular gas chamber 22 and the discharge port 24 of the upper portion 2 of the apparatus horizontally.

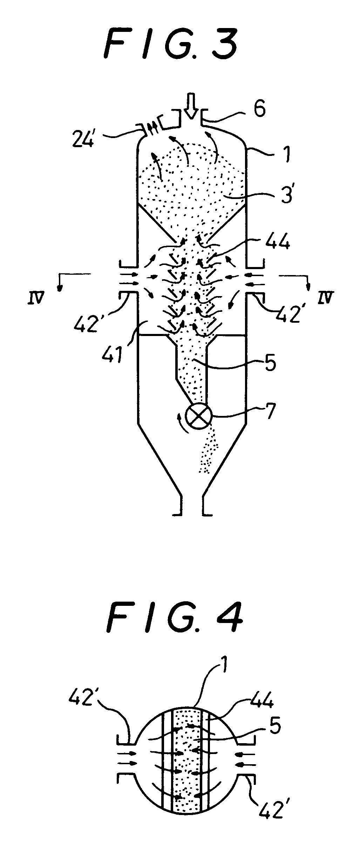

Fig. 3 shows a second embodiment of the present invention and Fig. 4 is a cross section taken along a line IV-IV in Fig. 3.

In Figs. 3 and 4, the second embodiment includes a substantially cylindrical air-tight container including an upper storage portion 3' which is formed at a top portion thereof with a reaciton agent supply port 6 and a gas discharge port 24' and a tapered bottom portion having a substantially rectangular opening for defining a hopper, a middle portion having a substantially rectangular column defined by a pair of parallel-arranged louvers 44 formed by fins whose angle and shape are determined as in the first embodiment and an air-tight lower portion. The middle portion is provided at opposite sides thereof with gas inlet ports 42' so that gas introduced therethrough in opposite directions can pass through the louvers 44 and flow upwardly through reaction agent filling the rectangular column having an upper end connected to a lower end of the rectangular opening of the upper portion. The lower portion includes a reaction agent discharge mechanism including a discharge device 7, which is substantially the same as that shown in Fig. 1, and connected to a lower end of the rectangular column defined by the louvers of the middle portion.

Reaction agent supplied through the reaction agent supply port 6 of the upper portion of the container 1 flows down to the discharge device 7 to fill a passage extending from the bottom opening of the hopper through the rectangular column defined by the louvers of the middle portion to the discharge device 7 and moves down by gravity at a speed regulated by the device 7. Gas introduced in opposite directions through the gas inlet ports 42' passes through the louvers 44, reaciton agent filling the rectangular column defined thereby at a certain speed and then reaction agent in the hopper at a lower speed and discharge through the gas outlet port 24'.

In each of the above mentioned embodiments, large dust particle is filtered out by reaction agent filling the space defined by the louver or louvers while flowing at a higher speed due to a smaller cross area thereof and fine dust particle is filtered out by reaction agent in the storage portion or the hopper while flowing at a lower speed. It should be noted that, although sulphur compound and/or nitrogen compound may be removed by reaction agent in the column defined by the louver or louvers to some extent, substantial removal of these substances are performed while gas passes through reaction agent in the reaction agent storage portion or hopper, since a time for which gas passes through the reaction agent column defined by the louver or louvers is substantially short compared with that for which gas passes through reaction agent in the storage portion.

## Claims

1. A method for removal of dust contained in a gas and for reaction of a toxic component in said gas with a reaction agent, comprising the steps of
a) flowing down a granular reaction agent by means of gravitation in a generally cylindrical, vertically disposed passage formed in a generally cylindrical air tight vessel (1), said passage being comprised of
a reaction agent storage portion (3, 3') comprising in a top portion thereof a gas outlet (24, 24') and a reaction agent supply port (6),
an intermediate portion (43) beneath and communicated with said reaction agent storage portion (3, 3') and defined with a vertical gas permeable wall (44) in a gas chamber (41) having a gas inlet port (42, 42'), and
a lower portion (5) beneath and communicated with said intermediate portion (43) and provided with a regulatable discharge means (7) at a bottom thereof,
a horizontal sectional area of said reaction agent storage portion (3, 3') being larger than that of said intermediate portion (43);
to thereby form a vertically moving granular bed in said passage, a downward moving speed of said granular bed in the reaction agent storage portion (3, 3') being less than that in the intermediate portion (43);
b) introducing the gas into the granular bed in the intermediate portion (43) through said vertical gas permeable wall (44);
c) changing gradually the direction of flow of the gas in the moving granular bed in the intermediate portion (43) from horizontal to upward;
d) flowing up the gas in the moving granular bed in the reaction agent storage portion (3, 3') in a counter flow mode at a less relative speed to the granular bed than that in the intermediate portion (43);
e) discharging the granular reaction agent through a discharging means (7) at a bottom of the lower portion (5), releasing the gas from the granular bed at an upper surface of the granular bed, and discharging the gas through the outlet (24, 24');
characterized by
f) regulating the discharging rate of the granular reaction agent by means of said discharge device (7) to control the downward moving speed of the granular bed, to achieve thereby that
i) dust having relatively large particle size contained in the gas is trapped in the granular reaction agent while the gas flows in the vicinity of an inflow portion of the gas in the intermediate portion (43),
ii) dust contained in the gas is further removed with granular reaction agent in the other portion of the intermediate portion (43), and
iii) dust having relatively fine particle size contained in the gas is removed simultaneously with reaction in the granular bed moving with relatively slow speed in the counter flow mode in the reaction agent storage portion (3, 3'), so that dust removal and reaction are performed simultaneously with a single granular bed column.

## Patentansprüche

1. Ein Verfahren zur Entstaubung von Gas und zur Reaktion einer toxischen Komponente in diesem Gas mit Reaktionsmittel, wobei das Verfahren die folgenden Schritte beinhaltet:
a) Abwärtsfließen eines Granultreaktionsmittels durch Schwerkraft in einer im allgemeinen zylindrischen, vertikal angeordneten Passage, die in einem im allgemeinen zylindrischen luftdichten Behälter (1) gebildet ist, wobei diese Passage besteht aus:
einem Reaktionsmittelvorratsabschnitt (3, 3'), der seinem oberen Abschnitt einen Gasauslaß (24, 24') und eine Reaktionsmittelzuführöffnung (6) aufweist,
einem darunter angeordneten Zwischenabschnitt (43) der mit dem Reaktionsmittelvorratsabschnitt (3, 3') verbunden ist und von einer vertikalen gasdurchlässigen Wand (44) in einer Gaskammer (41) begrenzt wird, die eine Gaseinlaßöffnung (42, 42') aufweist, und
einem darunter angeordneten unteren Abschnitt (5) der mit dem Zwischenabschnitt (43) verbunden ist und an seinem Boden mit einer regulierbaren Austragsvorrichtung versehen ist,
wobei eine horizontale Querschnittsfläche des Reaktionsmittelvorratsabschnittes (3, 3') größer ist als die des Zwischenabschnittes (43);
um hierbei ein vertikales Granulatwanderbett in dieser Passage zu bilden, wobei eine Abwärtsbewegungsgeschwindigkeit des Granulatbettes im Reaktionsmittelvorratsabschnitt (3, 3') geringer als die im Zwischenabschnitt (43) ist;
b) Einführen der Gase durch die vertikale gasdurchlässige Wand (44) in das Granulatbett im Zwischenabschnitt (43);
c) Stufenweise Abänderung der Fließrichtung der Gase im Granulatwanderbett im Zwischenabschnitt (43) von der horizontalen Richtung nach oben;
d) Aufwärtsfließen der Gase im Granulatwanderbett im Reaktionsmittelvorratsabschnitt (3, 3') in das Granulatbett im Gegenfluß und mit einer geringeren relativen Geschwindigkeit als die im Zwischenabschnitt (43);
e) Austragen des Granulatreaktionsmittels durch eine Austragsvorrichtung an einem Boden des unteren Abschnittes (5), Auslassen der Gase aus dem Granulatbett an einer Oberschicht des Granulatbettes, und Austragen der Gase durch den Auslaß (24, 24');
gekennzeichnet durch
f) eine Regulierung der Austragsgeschwindigkeit des Granulatreaktionsmittels durch die Austragseinrichtung (7), um die Abwärtsbewegungsgeschwindigkeit des Granulatbettes zu steuern, um hierbei zu erreichen, daß
i) der in den Gasen enthaltene Staub mit einer relativ großen Partikelgröße in dem Granulatreaktionsmittel eingefangen wird, während die Gase im Bereich eines Einfließabschnittes der Gase in den Zwischenabschnitt (43) fließen,
ii) der in den Gasen enthaltene Staub von dem Granulatreaktionsmittel im anderen Abschnitt des Zwischenabschnittes (43) weiter entfernt wird, und
iii) der in den Gasen enthaltene Staub mit einer relativ feinen Partikelgröße gleichzeitig durch die Reaktion im Granulatbett entfernt wird, das sich mit einer relativ langsamen Geschwindigkeit im Gegenfluß im Reaktionsmittelvorratsabschnitt (3, 3') bewegt, so daß die Staubentfernung und die Reaktion gleichzeitig mit einer einzigen Granultbettsäule ausgeführt werden.

## Revendications

1. Procédé pour éliminer les poussières contenues dans un gaz et pour faire réagir des composés toxiques contenus dans ledit gaz avec un agent de réaction, comportant les étapes
a) d'écoulement vers le bas au moyen de la pesanteur d'agent de réaction granulaire dans un passage sensiblement cylindrique disposé verticalement et formé dans un réservoir étanche à l'air sensiblement cylindrique (1) , ledit passage étant constitué
d'une partie de stockage d'agent de réaction (3,3') présentant à sa partie supérieure une sortie de gaz (24,24') et un orifice d'alimentation en agent de réaction (6),
d'une partie intermédiaire (43) située sous ladite partie de stockage d'agent de réaction (3,3') et communiquant avec elle, cette partie étant formée par une paroi verticale perméable aux gaz (44) disposée dans une chambre à gaz (41) présentant un orifice d'entrée de gaz (42,42'), et d'une partie inférieure (5) située sous ladite partie intermédiaire (43) et communiquant avec elle, cette partie étant munie de moyens de décharge réglables (7) en son fond,
l'aire de section horizontale de ladite partie de stockage d'agent de réaction (3,3') étant plus grande que celle de ladite partie intermédiaire (43),
pour former ainsi dans ledit passage un lit granulaire se déplaçant verticalement, la vitesse de déplacement vers le bas dudit lit granulaire dans la partie de stockage d'agent de réaction (3,"') étant inférieure à la vitesse dans la partie intermédiaire (43),
b) d'introduction du gaz dans le lit granulaire de la partie intermédiaire (43) à travers ladite paroi verticale perméable aux gaz (44),
c) de modification progressive vers le haut à partir de l'horizontale de la direction d'écoulement du gaz dans le lit granulaire en déplacement dans la partie intermédiaire (43),
d/ d'écoulement ascendant du gaz dans le lit granulaire en déplacement dans la partie de stockage d'agent de réaction (3,3') suivant un mode d'écoulement à contre-courant à une vitesse relative par rapport au lit granulaire moindre, que dans la partie intermédiaire (43),
e) de décharge de l'agent de réaction granulaire à travers les moyens de décharge (7) du fond de la partie inférieure (5), en libérant le gaz provenant du lit granulaire à la surface de ce lit granulaire et en évacuant ce gaz par la sortie (24,24'),
caractérisé par
f) la régulation du débit de décharge de l'agent de réaction granulaire au moyen dudit dispositif de décharge (7) pour commander la vitesse de déplacement vers le bas du lit granulaire et obtenir ainsi que
i) les poussières en particules de dimensions relativement grandes contenues dans le gaz soient emprisonnées dans l'agent de réaction granulaire tandis que le gaz s'écoule au voisinage de la zone d'entrée de gaz dans la partie intermédiaire (43), et
iii) les poussières en particules de dimensions relativement faibles contenues dans le gaz soient éliminées en même temps qu'à lieu la réaction dans le lit granulaire se déplaçant à vitesse relativement faible suivant un mode d'écoulement à contre-courant dans la partie de stockage d'agent de réaction (3,3') de sorte que l'élimination des poussières et la réaction soient effectuées simultanément avec une seule colonne à lit granulaire.
